# EUROPEAN PATENT SPECIFICATION

(11) **EP 1 658 774 B1**
(45) Date of publication and mention of the grant of the patent: **06.04.2011**
(21) Application number: 04772552.8
(22) Date of filing: 25.08.2004
(51) Int. Cl.: A22C 17/02

(54) **MEAT DRESSING/BONING METHOD AND SYSTEM THEREFOR**
AUSSCHLACHTUNGS-/AUSBEINUNGSVERFAHREN FÜR FLEISCH UND SYSTEM DAFÜR
PROCEDE DE PARAGE ET DE DESOSSAGE DE VIANDE ET SYSTEME ASSOCIE

(30) Priority: 27.08.2003 JP 2003303712
(43) Date of publication of application: 24.05.2006
(73) Proprietor: Mayekawa Mfg. Co., Ltd., Tokyo 135-0046 (JP)
(72) Inventor: MAMMOTO, Shinzo, c/o MAYEKAWA MFG. CO., LTD., Koto-ku, Tokyo 135-0046 (JP); TOYOSHIMA, Katsumi, c/o MAYEKAWA MFG. CO., LTD., Koto-ku, Tokyo 135-0046 (JP); HINO, Kazuchika,c/o MAYEKAWA MFG. CO., LTD., Koto-ku, Tokyo 135-0046 (JP); CHIMURA, Takeshi, c/o MAYEKAWA MFG. CO., LTD., Koto-ku, Tokyo 135-0046 (JP)
(74) Representative: Strehl Schübel-Hopf & Partner
(86) International application number: PCT/JP2004/012596
(87) International publication number: WO 2005/020695

(56) References cited:
- EP-A- 0 898 894
- GB-A- 2 277 245
- JP-A- 2000 106 818
- JP-A- 2002 223 694
- US-A- 4 651 384

## Description

### Technical field

The present invention relates to a method and system applied for boning and dressing meat block with bones such as a thigh, shoulder, arm, head, or carcass, in which the meat block with bones is boned and dressed while it is clamped and hanged by means of a hanger and transferred together with the hanger along a rail supporting the hanger.

### Background art

There are disclosed arts to bone and dress a carcass of pig, chicken, cattle, etc. to obtain meat block in patent literature 1(Japanese Laid-Open Patent Application No.2000-83575) and patent literature 2(Japanese Laid-Open Patent Application No.2000-125752).

According to the art disclosed in patent literature 1, an apparatus for securing a pig carcass is provided with a dissection line rail from which a pig carcass is hanged by means of a hanger so that the carcass can be transferred along the rail by transferring the hanger along the rail, and a plate of which the upper end is supported rotatably so that the plate can be turned upwards in a plane perpendicular to the transfer direction of the carcass, i.e. perpendicular to the direction of the dissection line rail, the plate having a groove in which the back side of the carcass can be fitted to be secured in the groove. The carcass is secured in the groove of the plate in a slanted attitude utilizing its own weight, so that workers can dissect and bone the carcass secured on the plate.

According to the art disclosed in patent literature 2, an apparatus for taking out meat from the head of a carcass of cattle, etc. is composed such that the head of the carcass is hanged by a chin supporting member having a chin supporting hook and a mouth opening protrusion provided to the upper part of a supporting member, and there are provided a cheek pulling member to pull down cheeks clamping both of the cheeks, an upper jaw removing means, a driving device to move the cheek pulling member, and a driving member to move the upper jaw removing means.

In the carcass securing apparatus of patent literature 1 for dissecting and boning a pig carcass, the worker can change only the inclination of the plate to adjust the attitude of the carcass when executing dissection and boning of a pig carcass. Therefore, the worker must perform the dissection and boning while pushing the carcass against the plate with one of his hand not holding a knife, and the work will be vexatiously complicated resulting in an increased operation time.

Further, in a conventional art like this, as the back of the pig carcass is received in a groove formed on the upper surface of the flat plate to secure the pig carcass therein and then dissection and boning is carried out, the carcass comes into plane contact with the surface of the groove resulting in an increased contact area, which tends to induce contamination of the pig carcass with various kind of bacteria from the plate side.

In the apparatus for taking out meat from the head of a carcass of cattle, etc. of patent literature 2, as the head of the carcass is hanged by means of a hanging means and dissection and boning is carried out while pulling the upper jaw and cheeks by means of the upper jaw removing means and cheek pulling means driven by driving means, the dissection and boning work is done with the head being hanged in an unstable condition, and work efficiency is lowresulting in an increased operation time.
A dressing and boning system with the features of the pre-characterizing portion of claim 1 is disclosed in GB-A-2277245.

### Disclosure of the Invention

The present invention was made in light of the problems of prior arts, and its object is to provide a method and system of boning/dressing a meat block with bones with which dissection, boning, and dressing operation of the meat block with bones can be performed easily in a short operation time, evading contamination of the meat block with bacteria and so forth.

To achieve the object, the present invention is defined as set out in claim 1. Further advantageous features are set out in the dependent claims.

According to the invention, the meat block with bones is hanged by means of the hanger member, and the back or lower surface of the meat block with bones, that is, the surface opposite to a surface on which the worker applies force mainly forprocessing (the surface processed by the worker) is brought into contact with the guide means extending parallel to the supporting rail, so dissection/boning/dressing can be carried out while it is transferred by transferring the hanger member along the supporting rail in a state in which the attitude of the meat block with bones is restricted by the guide means, since the swing of the meat block with bones in a plane containing a straight line perpendicular to the supporting rail and the center axis of the supporting bar by virtue of the first joint provided between the upper end side of the supporting bar and the supporting rail and the swing in a plane containing a straight line parallel to the supporting rail and the center axis of the connecting bar by virtue of the second joint provided between the lower end side of the supporting bar and the clamping mechanism are restricted by the contact of the meat block with bones to the guide means. Therefore, the operation of dissecting/boning/dressing of the meat block with bones can be carried out complying with the change of attitude of the meat block with bones along the guide means extending along the supporting rail first.

As the meat block with bones is hanged with its upper part clamped by the hanging mechanism and the bottom surface thereof is supported or the lower part of the back face thereof is supported by the guide means to restrict the attitude thereof, that is, a part of the surface opposite to the surface processed by the worker is supported, the meat block with bones can be stably secured in position only by the application of force by the worker. Therefore, it is not needed to press the meat block with bones (pig carcass) with a hand of the worker when performing operation of dissecting/boning as is in the prior art disclosed in patent literature 1, and the operation can be carried out using both hands.

By this, operation of dissection/boning/dressing can be performed with ease and operation time can be reduced.

Further, as guide means is made of pipe or bar material, the meat block with bones hanged by means of the hanger member is supported by the guide means at a part of the surface opposite to the surface processed by the worker with line contact, contamination of the meat block with bones with bacteria can be suppressed compared to the prior art disclosed in patent literature 1 in which the meat block with bones (pig carcass) is supported with plane contact, and operation of dissecting/boning/dressing can be performed very sanitarily.

Two preferable methods are proposed as follows.

According to the first method, which is in accordance with the present invention, said guide means is composed of two guide members extending along said supporting rail and with such a distance between them that the meat block with bones can be laid on the guide members, and the meat block with bones is dissected/boned/dressed while it is transferred lying on the guide members and changing its inclination or horizontality by the swing at the second joint.

In this first method, said guide means is composed of an inner guide located near to the worker and an outer guide located remoter from the worker than the inner guide, in other words, the guide means is composed of two guides extending parallel to the supporting rail and being located to have such a distance between them that the meat block with bones can be laid on them, and the meat block with bones is dissected/boned/dressed while it is transferred lying on the guide members and changing its inclination or horizontality by virtue of the swing at the second joint.

In the first method, it is preferable that each of said twoguidemembershasanupwardslanted portion, a horizontally extending portion, and preferably downward slanted portion. Initial processing is carried out on the upper part of the meat block with bones(the side thereof clamped by the clamp mechanism) when the meat block with bones is transferred along the upward slanted portions of the guide members, then the meat block with bones is transferred towards the horizontally extending portions of the guide members where main processing is carried out.

The meat block with bones is transferred to the downward slanting portions of the guide members, where its attitude changes to a hanged state due to its own weight as it is advanced passing through the downward slanted portions of the guide members.

The system for implementing the first method is composed such that said guide means is composed of two guide members extending along said supporting rail, each of said two guide members having in its introducing region an inclined part slanted upward to raise the meat block with bones and introduce it to a processing region and a horizontally extending portion continuing to said slanted portion and extending parallel to said supporting rail.

According to the first method and the system for carrying out the first method, the meat block with bones held by the clamp mechanism and hanged by way of the first joint for allowing a swing in a plane containing a straight line perpendicular to the supporting rail and the axis of the supporting bar and the second joint for allowing a swing in a plane containing a straight line parallel to the supporting rail and the axis of the connecting bar, can be laid on the upward slanting portions of the two fixed guide members extending parallel to the supporting rail when performing initial processing with its lower side surface stably contacting onto the slanting portions of the guide members, and the meat block with bones can be kept in a nearly upright attitude leaning on the slanting portions by virtue of the second joint provided just above the clamping mechanism for allowing the swing in a plane containing a straight line parallel to the supporting and the axis of the connecting bar. Therefore, initial processing becomes easy in said nearly upright attitude of the meat block with bones.

Then, the meat block with bones is transferred to the horizontal portion of the guide means by transferring it along the supporting rail and the main processing of the meat block with bones can be carried out with the meat block with bones kept stably in a horizontal attitude.

Therefore, with the first method and the apparatus for performing the method, the meat block with bones can be processed while it is held in a state it is raised to take a slanting attitude or in a state it is lying in a horizontal attitude in accordance with the change of the inclination of the two fixed guide members by allowing it to be guided along the guide members only by transferring it along the supporting rail without particular operation from outside, so dissection/boning/dressing of the meat block with bones can be carried out with the compact apparatus and in reduced operation time.

Accordingly, with the construction, operation of dissecting/boning/ dressing the meat block with bones can be performed while keeping the attitude of the meat block so as to be easy for the worker or workers to carry out the operation.

The second method, which is not an example for the present invention, is mainly applied to a case of boning the meat block with bones in a hanged attitude and characterized in that there is provided a guide means which is made of pipe or bar material extending along said supporting rail and located so that the back face of the meat block with bones comes into contact with the guide means, the guide means facing the worker and being supported so as to be moved in directions to depart or access from or to the worker; and the meat block with bones is dissected/boned/dressed while restricting and adjusting the swing angle at the first joint of the hanger member in accordance with the displacement of the guide means.

In this second method, the guide means made of pipe or bar material extending along said supporting rail is located so that the back face of the meat block with bones comes into contact with the guide means, the guide means is supported to face the worker and to be moved in directions to depart or access from or to the worker, and the swing displacement of the meat block with bones around the first joint which allows a swing in a plane containing a straight line perpendicular to the supporting rail and the axis of the supporting bar is restricted by the guide means.

As the guide means is supported to face the worker and to be moved in directions to depart or access from or to the worker, the swing angle of the meat block with bones around the first joint is determined in accordance with the displacement of the guide means, and the inclination of the meat block with bones can be determined flexibly as desired.

Further, by connecting said clamp mechanism to the connecting bar connecting the clamp mechanism to the second joint to be rotatable around the center axis of the connecting bar, the meat block with bones can be rotated around the connecting bar in the state the meat block with bones is leaning against the guide means, so knife operation in the vertical direction including removing fat and dressing meat can be done easily resulting in easy processing of the meat block with bones on both front and back face thereof, which is particularly effective for boning in a hanged attitude of the meat block with bones.

The supporting bar may be connected to the first joint rotatably around the center axis of the supporting bar or the second joint may be connected to the supporting bar rotatably around the center axis of the supporting bar instead of connecting the clamp mechanism to the connecting bar to be rotatably around the center axis of the connecting bar.

The system for implementing the second method is composed such that a guide means is provided, which is made of pipe or bar material extending along said supporting rail and located so that the back face of the meat block with bones comes into contact with the guide means, the guide means facing the worker and being supported so as to be moved in directions to depart or access from or to the worker.

It is preferable that said guide means is composed of a single guide member, the guide member being connected to links supported rotatably by a supporting shaft provided on a platform so that the guide member can be swung around the center axis of said supporting shaft, and the guide member is connected to an actuating means for pushing or pulling the guide member in directions of accessing or departing to or from the worker.

It is suitable that said actuating means is a hydraulic cylinder or air cylinder which allows said guide member to swing the guide member to swing around said supporting shaft by way of said link to move to and fro for the worker.

According to the second method and the system for carrying out the second method, the meat block with bones clamped by the clamping mechanism and hanged from the supporting rail can be flexibly changed in its inclination and distance from the worker by virtue of the first joint which allows a swing in the plane containing a straight line perpendicular to the supporting rail and the center axis of the supporting bar and the second joint which allows a swing in the plane containing a strait line parallel to the supporting rail and the center axis of the connecting bar only by moving the guide means consisting of a single guide member back and forth for the worker by means of the guide member driving means preferably composed of a hydraulic cylinder, so dissection/ boning/dressing of the meat block with bones can be performed efficiently.

As has been described in the forgoing, according to the present invention, the meat block with bones hanged by means of the hanger member is allowed to be guided along the guide means extending parallel along the supporting rail for supporting the hanger member, and the operation of dissecting/boning/ dressing the meat block with bones is done while the hanger member is transferred along the supporting rail, so that the operation can be performed while adjusting the inclination or horizontality of the meat block with bones flexibly as needed.

Further, as the operation is carried out while the meat block with bones is transferred along the guide means with the lower part of the meat block with bones being brought into contact with the surface of the guide member made of pipe or bar material, the meat block with bones contacts in line contact with the guide means, so contamination of the meat block with bones with bacteria, etc. is suppressed and the operation of dissection/boning/ dressing can be performed highly sanitarily.

### Brief Description of the Drawings

FIG.1 is a side view of the first embodiment of the meat dressing/boning system of the present invention.
FIG.2 is a view in the direction of arrows A-A in FIG.1.
FIG.3 is a view in the direction of arrows B-B in FIG.2.
FIG.4 is a side view of the second embodiment of the meat dressing/boning system, which is not an embodiment of the present invention.
FIG.5A and FIG.5B are perspective views of the first clamp mechanism.
FIG.6A is perspective views of the first clamp mechanism, and FIG. 6B is a sectional view taken along lines Z-Z in FIG. 6A.

### Best mode for embodiment of the Invention

A preferred embodiment of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

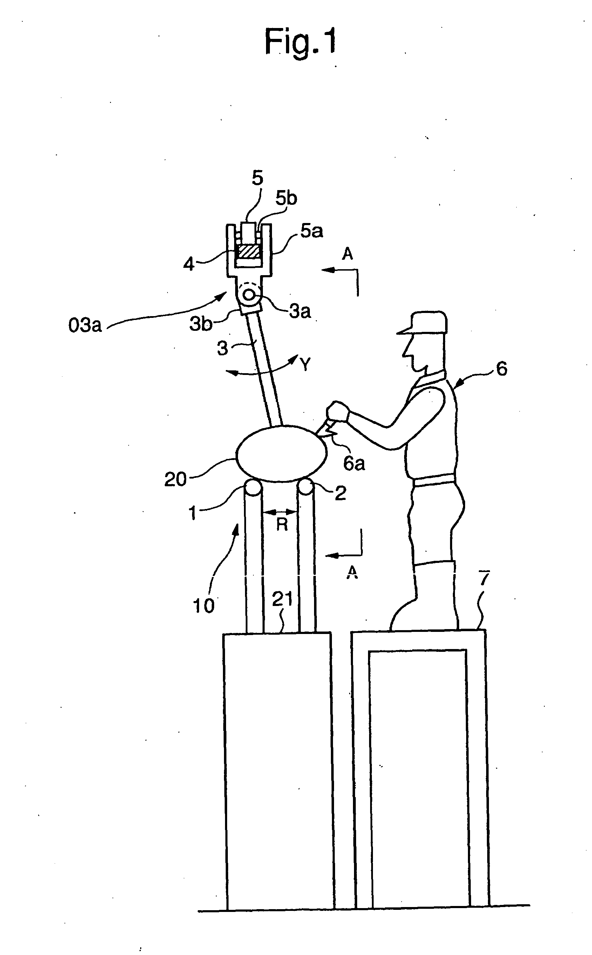

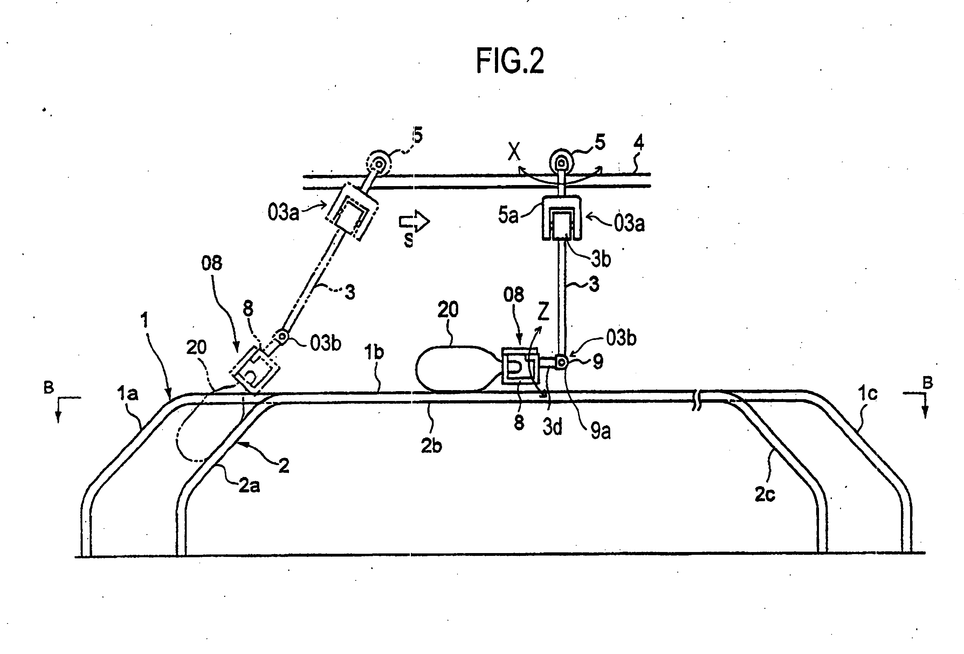

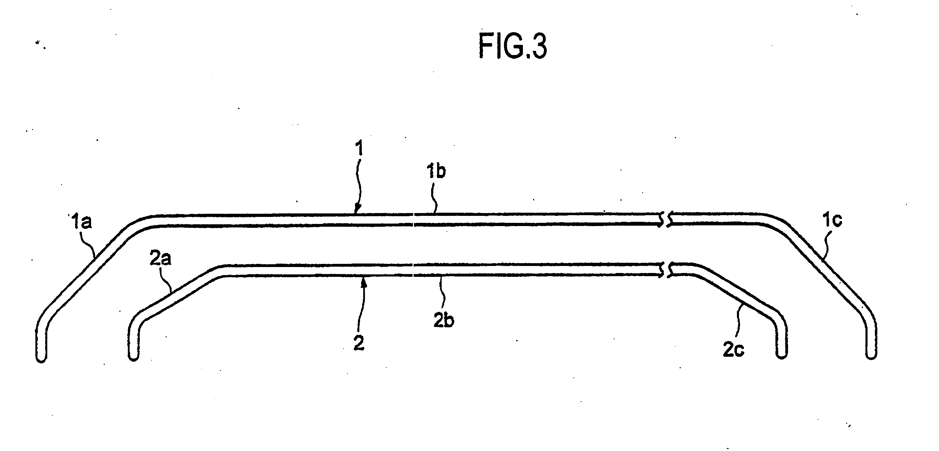

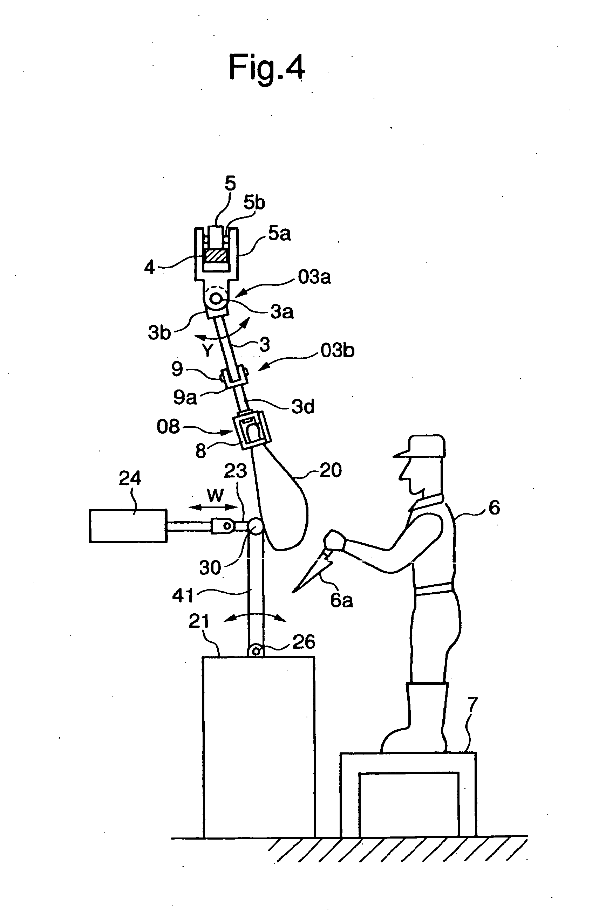

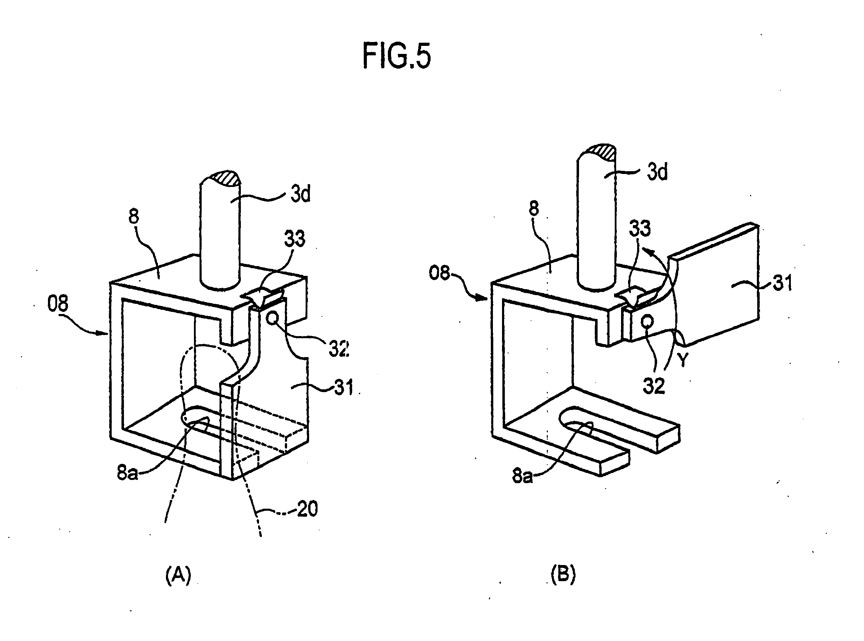

FIG.1 is a side view of the first embodiment of the meat dressing/boning system of the present invention, FIG.2 is a view in the direction of arrows A-A in FIG.1, and FIG.3 is a view in the direction of arrows B-B in FIG.2. FIG.4 is a side view of the second embodiment of the meat dressing/boning system of the present invention, and FIG.5A and FIG. 5B are perspective views of the first clamp mechanism.

Referring to FIG. 1~3, reference numeral 20 is a meat block of pig, chicken, etc. with bones(hereafter referred to as a meat block) to be dissected, boned, or dressed, 4 is a rail attached to the ceiling of a workshop to transfer the meat block 20 by a means described later. Said rail 4 is provided above a worker 6 to stretch in a straight line or curved line along the direction of processing of dissection and boning of the meat block 20(along the direction extending to the left and right of the worker 6).

Reference numeral 5 is a roller supported for rotation by a pin 5b at the upper part of a roller support 5a so that the roller 5 can roll on the rail 4 to transfer the roller support 5a along the rail 4. Reference numeral 3b is a joint bracket fixed to the upper end of a supporting bar 3, the joint bracket 3b being rotatably connected by means of a pin 3a to the lower part of the roller support 5a so that the supporting bar 3 is rotatable in the directions indicated by Y in FIG.1, by which the lower end of the supporting bar 3 can be drawn near towards or drawn apart from the worker 6. The joint bracket 3b and pin 3a constitute a first joint 03a. (Hereafter, the direction Y is referred to as accessing/departing direction.)

With the composition like this, said roller support 5a can be swung around the pin 5b in a plane containing the extending line of the rail 4 as shown by arrows X in FIG.2, and the supporting bar 3 can be swung around the pin 3a in a plane containing a straight line perpendicular to the rail 4 and the center axis of the supporting bar 3 in accessing/ departing directions to and from the worker 6 as shown by arrows Y in FIG.1.

At the lower end part of the supporting bar 3 is attached a pin 9a to be perpendicular to the pin 3a, and a second joint bracket 9 is supported for rotation by the pin 9a, the second joint bracket 9 and pin 9a constituting a second joint 03b.

To the second joint bracket 9 is fixed an end of a connecting bar 3d, and a clamp mechanism 08 is attached to the other end of the connecting bar 3d. The clamp mechanism 08 is rotatable in a plane containing the supporting bar 3 and parallel to the rail 4 as shown by arrows Z in FIG.2.

The meat block 20 is held at its root of bone part which is a part near a joint of bone by a clamper 8 of the clamp mechanism 08 as shown in FIG.2.

Thus, the clamp mechanism 08 is connected to the joint bracket 9 by means of the connecting bar 3d fixed to the upper face of the clamp 8 so that the clamp mechanism 08 can be swung in a plane containing the supporting bar 3 and parallel to the rail 4 (in the direction of arrows Z in FIG.2) as shown in FIG.5A and FIG.5B. In this example, the clamper 8 is fixed to the connecting bar 3d, the connecting bar 3d may be connected rotatably to the connecting bar 3d.

Referring to FIG. 5A and FIG.5B showing the clamp mechanism 08 in detail, the clamper 8 is formed in a shape having an upper plate, a lower plate, and a side plate connecting the upper and lower plate, the upper plate having a protruded part protruding parallel to the side plate, the lower plate having a groove 8a of which the periphery has a general shape of a letter "U" and into which the root of bone part which is a part near a joint of bone of the meat block can be inserted to be held thereby, and the upper plate is connected to the connecting bar 3d. Although the upper plate of the clamper 8 is fixed to the connecting bar 3d in this case, the upper plate of the clamper 8 may be connected rotatably to the connecting bar 3d so that the clamp mechanism 08 is rotatable around the connecting bar 3d.

Reference numeral 31 is a stopper to close the opening in the opposite side of the side plate. The stopper 31 is attached to the protruding part protruding parallel to the side plate of the clamper 8 to be rotatable by means of a pin 32. Reference numeral 33 is a plate spring attached to the upper plate. The plate spring 33 works to prevent the meat block 20 from sliding out of the groove 8a by keeping the stopper 31 in a closed state by pushing the upper surface of the stopper 31 with its spring force when the meat block 20 is inserted into the groove 8a to be held therein and the stopper 31 closes the opening in the opposite side of the side plate as shown in FIG.5A. When the stopper 31 is turned around the pin 32 in a direction Y1 in FIG.5B to open the opening in the opposite side of the side plate, the stopper 31 is kept in an opened state with a side face thereof pushed by the spring force of the plate spring 33.

In FIG.1, reference numeral 10 is a pair of meat block guides for guiding the meat block 20 and consists of an inner guide 2 which is located nearer to the worker 6 and an outer guide 1 which is located remoter from the worker than the inner guide 2, both of the guides being supported on a platform 21 so that both guides are parallel to the rail 4. As shown in FIG.1, the distance R between the outer guide 1 and inner guide 2 is determined to be such a space that the meat block 20 can lie stably on the guides without falling down through the space.

It is preferable that the outer guide 1 and inner guide 2 are made of steel pipe or bar coated with heat-shrinkable resin on the outer surface, but a pipe or bar made of material safe for food such as, for example, stainless steel or resin may be suitably used for the guides.

The outer guide 1 and inner guide 2 are formed to have initial rising parts 1a and 2a respectively for introducing the meat block 20, i.e. the initial processing sides of the guides are inclined for guiding the meat block 20 in the direction slanted upwards. Horizontal parts 1b and 2b are formed continuing to the inclined parts 1a and 2b respectively, and then downward slanting portions 1c and 2c are formed continuing to the horizontal parts 1b and 2b respectively for guiding the meat block 20 downwards.

In FIG.1 , reference numeral 6a is a knife held by the worker 6, 7 is a platform for the worker 6 to stand thereon. The platform 7 can be moved up and down although the mechanism for it is not shown in FIG.1 so that the height position of the worker 6 relative to the meat block 20 can be adjusted.

When performing dissection/boning/dressing of the meat block 20 such as a thigh for example, the thigh is held at its end part of the thigh bone in the groove 8a of the clamper 8 and moved up to lie on the inclined parts 1a and 2a of the pair of meat block guides 10 in a state the thigh(meat block 20) is hanging from the rail 4 by way of the roller 5, roller support 5a, first joint 03a supporting bar 3, second joint 03b, connecting bar 3d. In this attitude, initial processing is carried out.

That is, when performing initial processing of dissection and boning of the meat block 20, the meat block 20 is brought to be in an attitude leaning on the upwardly inclining parts 1a and 2a of the pair of meat block guides 10 by virtue of swing in directions indicated by arrows X around the pin 5b, swing in directions indicated by arrows Y around the pin 3a of the first joint 03a, the swing direction X and Y being perpendicular to each other. The initial processing is carried out while the meat block 20 is lifted upwards along the inclining parts of the pair of meat block guides 10 with the outer surface of the stopper 31 of the clamp mechanism 08 facing to the upper left as shown by chain lines in FIG.2.

After the initial processing is carried out as described above, the meat block 20 is transferred to the horizontal parts of the outer guide 1b and 2b extending parallel to the rail 4 by the transfer of the roller 5, then main processing, such as dressing meat, removing fat, is carried out by the worker 6 with the knife 6a while the meat block 20 is allowed to lie on the horizontal parts 1b and 2b and transferred in this attitude along the horizontal parts 1b and 2b in the direction S in FIG.2 as shown by solid lines in FIG.2.

That is, the main processing is done in a state the meat block 20 is hanging from the rail 4 by way of the roller 5, roller support 5a, first joint 03a supporting bar 3, second joint 03b, connecting bar 3d, and clamp mechanism 08, and lying on the pair of guides. Therefore, the meat block 20 is held to be capable of being swung in the accessing/departing direction to or from the worker 6 as shown by arrows Y in FIG. 1 by virtue of the first joint 03a, and also to be capable of being swung in a plane containing the supporting bar 3 and parallel to the rail 4 as shown by arrows Z in FIG.2 by virtue of the second joint 03b.

Accordingly, degrees of freedom of the worker 6 when carrying out dissection/boning/dressing is increased, for the meat block is processed in a state it is held to be capable of being swung in two direction perpendicular to each other, that is, in the direction along the rail 4(directions X in FIG.2) and in the accessing/departing direction to or from the worker (directions X in FIG.1).

Further, as the meat block 20 is held to be capable of being swung in the accessing/departing direction to or from the worker 6 (directions Y in FIG.1) by virtue of the first joint 03a, and to be capable of being swung in the vertical direction (directions Z in FIG.2) by virtue of the second joint 03b, the worker 6 can perform dissection/boning/dressing while moving the meat block 20 partway in the accessing/departing direction and in the vertical or near vertical direction. The meat block 20 can be rotated partway around the connecting bar in the case the clamp mechanism 08 is connected rotatably to the connecting bar. Therefore, the worker 6 can adjust the attitude of the meat block 20 in a certain degree to ease his operation maximally, which contributes to increase work efficiency.

The meat block 20 undergone the main processing as described above is transferred to the downward slanting portions 1c and 2c in the discharging side continuing to the horizontal parts 1b and 2b, and the lower end part of the meat block 20 is processed lastly while it is hanged and leaning on the downward slanting portions 1c and 2c.

According to the embodiment, the meat block 20 is held by its root of bone part to the groove 8a of the clamper 8 and hanged from the rail 4 by way of the roller 5 transferring on the rail 4, roller support 5a, first joint 03a, supporting bar 3, second joint 03b, and connecting bar 3d, so the meat block 20 is held to be capable of being swung in three directions perpendicular to each other, i.e. the direction along the rail 4(directions X in FIG.2), the direction of accessing/departing to or from the worker(directions Y in FIG.1), and the vertical or nearly vertical direction (directions Z in FIG.2). The meat block 20 held as described above is transferred with a part of its outer surface contacting to the pair of meat block guides 10 consisting of the inner guide 2 and outer guide 1, each extending parallel to the rail 4, and the operation of dissection/boning/dressing is done while transferring the meat block 20. Therefore, the attitude of the meat block 20 is determined according to the form of the meat block guides 10 which is changed along the extending direction of the rail 4, and the dissection/boning/dressing can be done with the attitude of the meat block 20 being determined in accordance with the degree of slanting and horizontality of the meat block guides 10.

As the meat block 20 is supported stably on the outer guide 1 and inner guide 2 with a lower part of the surface thereof contacting to the guides so that it can be slid on the guides in the direction along the rail 4 in a state it is held by its root of bone part by the clamper 8 so as to be capable of being swung in three directions perpendicular to each other, the worker 6 needs not to secure the meat block 20 with his hand, and the worker can easily carry out dissection/boning/dressing with both hands. Therefore, dissecting/boning/dressing operation can be simplified and operation time can be reduced.

Further, as dissecting/ boning/dressing operation is performed while the meat block 20 is transferred along the meat block guides 10 with its lower face contacting to the surface of the outer guide 1 and inner guide 2 made of pipe or bar, the meat block 20 is processed while it is supported on the outer guide 1 and inner guide 2 with line contact. Therefore, contamination of the meat block 20 with bacteria and so forth is suppressed compared to the prior art in which the meat to be treated is supported with plane contact.

Further, according to the embodiment, the meat block can be processed flexibly in a slanted attitude leaning against the meat block guides 10 or in a horizontal attitude lying on the meat block guides 10 only by holding the meat block 20 with the clamp mechanism 08 and guiding it along the pair of meat block guides 10 consisting of the inner guide 2 and outer guide 1, without particular operation from outside.

Further, according to the embodiment, as the meat block 20 is processed while transferred continuously along the rail 4 with a part of the bone thereof clamped by the clamping mechanism 08, the meat blocks 20 are transferred without changing transferring order thereof even if a plurality of workers are engaged in processing, and traceability of the processed meat block can be assured. The clamp mechanism 08 and second joint bracket 9 can be detached only by removing the pin 9a to be cleaned after the processing of the meat block 20 is finished.

Next, the second embodiment, which is not an embodiment of the present invention, will be explained hereunder.

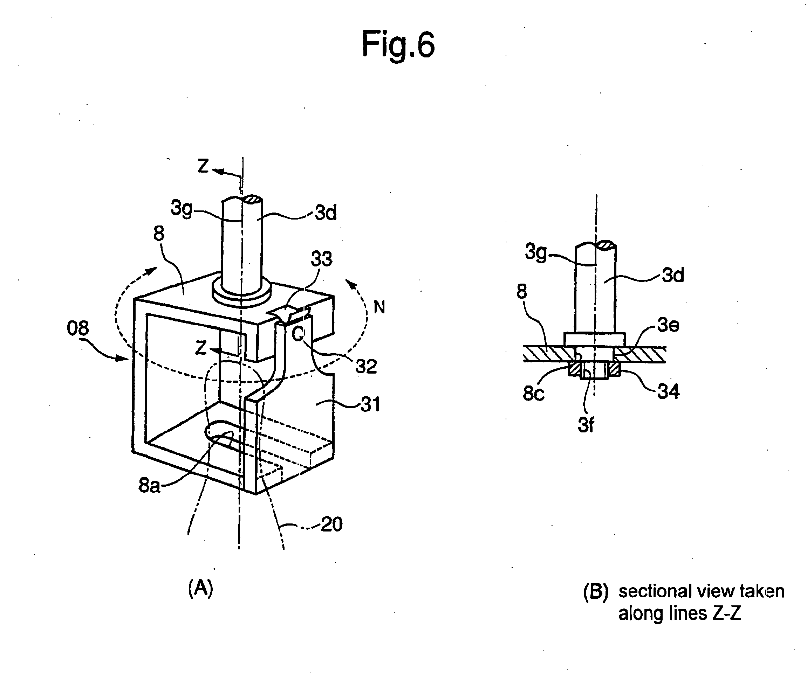

Referring to FIG.4 and FIG. 6 showing the second embodiment, a meat block guide 30 made of pipe or bar material and extending parallel to the rail 4 is provided such that the guide 30 can be moved in directions of accessing/departing to or from the worker 6 (directions W in FIG. 4). The meat block 20 comes into line contact with the surface of the meat block guide 30.

In FIG.4, the meat block guide 30 is supported by links 41 which is supported by a shaft 26 to be rotatable around the shaft 26 which extends parallel to the rail 4 and fixed to a platform 21 so that the meat block guide 30 can be moved in directions of accessing/departing to or from the worker 6. To the meat block guide 30 is connected a horizontal link 23 which is connected to an air cylinder or hydraulic cylinder 24.

In FIG.4, the rail 4 attached to the ceiling of a workshop to transfer the meat block 20 extends above a worker 6 stretching in a straight line or curved line along the direction of processing the dissection/ boning/dressing of the meat block 20 (along directions extending to the left and right of the worker 6).

Reference numeral 5 is a roller supported for rotation by a pin 5b at the upper pain of a roller support 5aso that the roller 5 can roll on the rail 4 to transfer the roller support 5a along the rail 4. Reference numeral 3b is a joint bracket fixed to the upper end of a supporting bar 3, the joint bracket 3b being rotatably connected by means of a pin 3a to the lower part of the roller support 5a so that the supporting bar 3 is rotatable in directions Y in FIG.4, by which the lower end of the supporting bar 3 can be drawn near towards or drawn apart from the worker 6. The joint bracket 3b and pin 3a constitute a first joint 03a.

With the composition like this, said roller support 5a can be swung around the pin 5b in a plane containing the extending line of the rail 4 as shown by arrows X in FIG. 2, and the supporting bar 3 can be swung around the pin 3a in the accessing/departing directions to and from the worker 6(in a direction perpendicular to the extending direction of the rail 4) as shown by arrows Y in FIG.4.

At the lower end part of the supporting bar 3 is attached a pin 9a to be perpendicular to the pin 3a, and a second joint bracket 9 is supported for rotation by the pin 9a, the second joint bracket 9 and pin 9a constituting a second joint 03b.

To the second joint bracket 9 is fixed an end of a connecting bar 3d, and a clamp mechanism 08 is attached to the other end of the connecting bar 3d. The clamp mechanism 08 is rotatable in a plane containing the supporting bar 3 and parallel to the rail 4 as shown by arrows Z in FIG.2.

The composition of the hanging mechanism of the meat block 20 shown in FIG.4 is similar to that of the first embodiment of FIG.1.

FIG.6A and FIG.6B show the clamp mechanism 08 in detail. The clamp mechanism 08 of FIG.6A is similar to that of FIG.5A except that the connecting bar 3d of FIG.5A is connected rotatably to clamper 8. Referring to FIG.6B, an inserting portion 3e of the connecting bar 3d is loose fitted to a hole 8c in the clamper 8 so that the clamper 8 can be rotated around the center axis 3g of the connecting bar 3d as shown by arrows N. Reference numeral 34 is a stopper nut screwed to the threaded end part of the connecting bar 3d.

The meat block 20 is inserted in the groove 8a of the clamper 8 to be held therein.

Reference numeral 31 is a stopper to close the opening in the opposite side of the side plate of the clamper 8. The stopper 31 is attached to the protruding part protruding parallel to the side plate of the clamper 8 rotatably by means of a pin 32. Reference numeral 33 is a plate spring attached to the upper plate. The plate spring 33 works to prevent the meat block 20 from sliding out of the groove 8a by keeping the stopper 31 in a closed state by pushing the upper surface of the stopper 31 with its spring force when the meat block 20 is inserted into the groove 8a to be held therein and the stopper 31 closes the opening in the opposite side of the side plate as shown in FIG.6A. When the stopper 31 is turned around the pin 32 in a direction Y1 in FIG.5B of the first embodiment to open the opening in the opposite side of the side plate, the stopper 31 is kept in an opened state by pushing a side face of the stopper 31 with the spring force of the plate spring 33.

According to the second embodiment, which is not an embodiment of present invention, the meat block 20 held by the clamp mechanism 08 is hanged from the rail 4 by way of the roller 5, roller support 5a, first joint 03a, supporting bar 3, second joint 03b, and connecting bar 3d, can be swung in directions of accessing/departing to or from the worker 6 (the direction of arrows Y in FIG.4), so the distance from the worker to the meat block 20 can be changed by swinging the meat block guide 30 in the direction of accessing/departing to or from the worker 6 as indicated by arrows W by actuating the hydraulic cylinder 24.

Therefore, according to the second embodiment, as the meat block guide 30 is supported rotatable around the shaft 26 by means of the link 41, the meat block 20 can be swung by virtue of the first articular member 03a by actuating the hydraulic cylinder 24 to push or pull the meat block guide 30 in directions W in FIG.4 so as to swing the meat block guide 30. Accordingly, dissection and boning operation can be carried out while changing freely the degree of inclination of the meat block 20 and distance to it from the worker 6.

Further, as the meat block is held by its root of bone part in the groove 8a of the clamp 8 and the inserting part 3e of the connecting bar 3d is loose fitted to the hole 8c of the clamper 8, knife operation in the vertical direction including removing fat and dressing meat can be done easily while rotating the meat block 20 around the axis 3g of the connecting bar 3d as shown by N in FIG.6.

### Industrial applicability

A meat dressing/boning method and system therefore with which contamination with bacteria and so forth is prevented and dissection, boning, and dressing operation of a meat block with bones can be achieved easily and in a decreased operation time can be provided.

## Claims

1. A system for dressing/boning a meat block (20) with bones manually, comprising:
a supporting bar which hanging from a supporting rail (4) extending in the direction of processing line, and
a holding mechanism (8) for holding the meat block, the holding mechanism being attached to the lower end the supporting bar and adapted to be transferred with the supporting bar along the supporting rail;
wherein said supporting bar comprises:
an upper side supporting bar (3),
a lower side connecting bar (3d),
a first joint (03a) provided between the upper end side of said upper side supporting bar and said supporting rail for allowing said upper side supporting bar to swing in a plane containing a straight line perpendicular to said supporting rail and the axis of said upper side supporting bar, and
a second joint (03b) provided between the lower end side of said upper side supporting bar and said lower side connecting bar for connecting said holding mechanism to the lower end side of said upper side supporting bar and for allowing said holding mechanism to swing in a plane containing a straight line parallel to said supporting rail and the axis of said connecting bar,
wherein the system further comprises guide means (10) made of pipe or bar material extending along said supporting rail so that a part of the surface of said meat block with bones opposite to the surface processed by a worker comes into line contact with said guide means, whereby swings of said meat block with bones by means said first and second joint are restricted by the contact of the meat block with bones to said guide means
**characterized in that**
the holding mechanism (8) is a clamp mechanism, and
the guide means are composed of two guide members (1,2) extending along said supporting rail, each of said two guide members having in its introducing region an inclined part (1 a, 2a) slanted upward to raise the meat block with bones and introduce it toward a processing region and a horizontally extending portion (1b, 2b) continuing to said slanted portion and extending parallel to said supporting rail.

2. The system of claim 1, wherein the two guide members (1, 2) extending along said supporting rail (4) are arranged with such a distance between them that the meat block (20) with bones can be laid on the guide members and boned/dressed while it is transferred lying on the guide members and such that its inclination can be varied by the swing at the second joint (03b).

3. A method of dressing/boning a meat block with bones manually using the system of claim 1 or 2, wherein
said meat block with bones is dissected/boned/dressed while it is transferred in a swinging manner, its swings by means of said first and second joint being restricted by its contact with said guide means.

4. The method of claim 3, wherein
the meat block with bones is transferred along the upward slanted portions of the guide members towards the horizontally extending portions of the guide members with its swing due to the swing at the second joint being restricted, and
the meat block with bones is boned/dressed in the horizontally extending portions of the guide members with its position in the vertical direction kept stable.

## Patentansprüche

1. System zum manuellen Ausschlachten/Ausbeinen eines Fleischblocks (20) mit Knochen, umfassend:
eine Tragestange, die von einer in der Richtung der Verarbeitungslinie verlaufenden Trageschiene (4) herunterhängt, und
einen Haltemechanismus (8) zum Halten des Fleischblocks, wobei der Haltemechanismus am unteren Ende der Tragestange angebracht ist und dazu ausgelegt ist, mit der Tragestange entlang der Trageschiene bewegt zu werden;
wobei die Tragestange umfasst:
eine Oberseiten-Tragestange (3),
eine Unterseiten-Verbindungsstange (3d),
ein zwischen der oberen Endseite der Oberseiten-Tragestange und der Trageschiene vorgesehenes erstes Gelenk (03a) dafür, dass der Oberseiten-Tragestange erlaubt wird, in einer Ebene zu schwingen, die eine zur Trageschiene und der Achse der Oberseiten-Tragestange senkrechte gerade Linie enthält, und
ein zwischen der unteren Endseite der Oberseiten-Tragestange und der Unterseiten-Verbindungsstange vorgesehenes zweites Gelenk (03b) zum Verbinden des Haltemechanismus mit der unteren Endseite der Oberseiten-Tragestange und dafür, dass dem Haltemechanismus erlaubt wird, in einer Ebene zu schwingen, die eine zur Trageschiene und der Achse der Verbindungsstange senkrechte gerade Linie enthält,
wobei das System ferner eine aus Rohr- oder Stangenmaterial hergestellte Führungseinrichtung (10) umfasst, die entlang der Trageschiene verläuft, so dass ein Teil der Oberfläche des Fleischblocks mit Knochen, die der von einem Arbeiter verarbeiteten Oberfläche gegenüberliegt, in Linienkontakt mit der Führungseinrichtung kommt, wodurch Schwingungen des Fleischblocks mit Knochen mittels des ersten und des zweiten Gelenks durch den Kontakt des Fleischblocks mit Knochen mit der Führungseinrichtung beschränkt werden;
**gekennzeichnet dadurch, dass**
der Haltemechanismus (8) ein Klemmenmechanismus ist und
sich die Führungseinrichtung aus zwei Führungselementen (1, 2) zusammensetzt, die entlang der Trageschiene verlaufen, wobei jedes der zwei Führungselemente in seinem Einführungsbereich ein geneigtes Teil (1a, 2a), das nach oben abgeschrägt ist, um den Fleischblock mit Knochen anzuheben und diesen in einen Verarbeitungsbereich einzuführen, sowie einen waagerecht verlaufenden Abschnitt (1b, 2b), der zum abgeschrägten Abschnitt weiterführt und parallel zur Trageschiene verläuft, aufweist.

2. System nach Anspruch 1, wobei die zwei entlang der Trageschiene (4) verlaufenden Führungselemente (1, 2) mit solch einem Abstand zwischen ihnen angeordnet sind, dass der Fleischblock (20) mit Knochen auf die Führungselemente gelegt und ausgebeint/ausgeschlachtet werden kann, während er auf den Führungselementen liegend bewegt wird und so, dass seine Neigung durch die Schwingung am zweiten Gelenk (03b) variiert werden kann.

3. Verfahren zum manuellen Ausschlachten/Ausbeinen eines Fleischblocks mit Knochen unter Verwendung des Systems aus Anspruch 1 oder 2, wobei
der Fleischblock mit Knochen zerlegt/ ausgebeint/ausgeschlachtet wird, während auf eine schwingende Weise bewegt wird, wobei seinen Schwingungen mittels des ersten und des zweiten Gelenks durch seinen Kontakt mit der Führungseinrichtung eingeschränkt sind.

4. Verfahren nach Anspruch 3, wobei
der Fleischblock mit Knochen entlang der nach oben abgeschrägten Abschnitte der Führungselemente zu den waagerecht verlaufenden Abschnitten der Führungselemente bewegt wird, wobei seine Schwingung aufgrund der Schwingung am zweiten Gelenk eingeschränkt ist, und
der Fleischblock mit Knochen in den waagerecht verlaufenden Abschnitten der Führungselemente ausgebeint/ausgeschlachtet wird, wobei seine Position in der senkrechten Richtung stabil gehalten wird.

## Revendications

1. Système pour parer/désosser manuellement un bloc de viande (20) avec des os, comprenant :
une barre de support qui est suspendue à un rail de support (4) s'étendant dans la direction de la ligne de traitement, et
un mécanisme de maintien (8) pour maintenir le bloc de viande, le mécanisme de maintien étant fixé à l'extrémité inférieure de la barre de support et adapté pour être transféré avec la barre de support le long du rail de support ;
dans lequel ladite barre de support comprend :
une barre de support du côté supérieur (3),
une barre de raccordement du côté inférieur (3d),
un premier joint (03a) prévu entre le côté d'extrémité supérieur de ladite barre de support du côté supérieur et ledit rail de support pour permettre à ladite barre de support du côté supérieur d'osciller dans un plan contenant une ligne droite perpendiculaire audit rail de support et à l'axe de ladite barre de support du côté supérieur, et
un deuxième joint (03b) prévu entre le côté d'extrémité inférieur de ladite barre de support du côté supérieur et ladite barre de raccordement du côté inférieur pour raccorder ledit mécanisme de maintien au côté d'extrémité inférieur de ladite barre de support du côté supérieur et pour permettre audit mécanisme de maintien d'osciller dans un plan contenant une ligne droite parallèle audit rail de support et à l'axe de ladite barre de raccordement,
dans lequel le système comprend en outre des moyens de guidage (10) réalisés avec un matériau de tuyau ou de barre s'étendant le long dudit rail de support de sorte qu'une partie de la surface dudit bloc de viande avec les os opposée à la surface traitée par un opérateur vient en contact linéaire avec lesdits moyens de guidage, moyennant quoi les oscillations dudit bloc de viande avec les os au moyen desdits premier et deuxième joints sont limitées par le contact du bloc de viande avec les os avec lesdits moyens de guidage,
**caractérisé en ce que**:
le mécanisme de maintien (8) est un mécanisme de serrage, et
les moyens de guidage sont composés de deux éléments de guidage (1,2) s'étendant le long dudit rail de support, chacun desdits deux éléments de guidage ayant dans sa région d'introduction, une partie inclinée (la, 2a) inclinée vers le haut pour faire monter le bloc de viande avec les os et l'introduire vers une région de traitement et une partie s'étendant
horizontalement (1b, 2b) continuant vers la partie inclinée et s'étendant parallèlement audit rail de support.

2. Système selon la revendication 1, dans lequel les deux éléments de guidage (1, 2) s'étendant le long dudit rail de support (4) sont agencés avec une distance telle entre eux que le bloc de viande (20) avec les os peut être posé sur les éléments de guidage et désossé/paré tandis qu'il est transféré en étant posé sur les éléments de guidage et de sorte que son inclinaison peut être modifiée par l'oscillation au niveau du deuxième joint (03b).

3. Procédé pour parer/désosser manuellement un bloc de viande avec des os en utilisant le système selon la revendication 1 ou 2, dans lequel:
ledit bloc de viande avec des os est disséqué/désossé/paré alors qu'il est transféré d'une manière oscillante, ses oscillations au moyen desdits premier et deuxième joints étant limitées par son contact avec lesdits moyens de guidage.

4. Procédé selon la revendication 3, dans lequel :
le bloc de viande avec les os est transféré le long des parties inclinées vers le haut des éléments de guidage vers les parties s'étendant horizontalement des éléments de guidage avec son oscillation due à l'oscillation au niveau du deuxième joint qui est limitée, et
le bloc de viande avec les os est désossé/paré dans les parties s'étendant horizontalement des éléments de guidage avec sa position dans la direction verticale maintenue stable.
